(19) Europäisches Patentamt

European Patent Office

Office européen des brevets

(11) **EP 1 561 769 B1**

(12) **EUROPEAN PATENT SPECIFICATION**

(45) Date of publication and mention
of the grant of the patent:
**14.11.2007 Bulletin 2007/46**

(51) Int Cl.:
*C08G 73/04* (2006.01)    *C11D 3/37* (2006.01)

(21) Application number: **05100723.5**

(22) Date of filing: **02.02.2005**

(54) **Polyalkylenimine-derived polymer, its production process and uses**

Polyalkyleniminderivat, dessen Herstellungsverfahren und Verwendungen

Dérivé de polyalkylèneimine, son procédé de préparation et ses utilisations

(84) Designated Contracting States:
**BE DE FR GB IT**

(30) Priority: **05.02.2004 JP 2004029481**
**08.06.2004 JP 2004170341**

(43) Date of publication of application:
**10.08.2005 Bulletin 2005/32**

(73) Proprietor: **NIPPON SHOKUBAI CO., LTD.**
**Osaka-shi, Osaka 541-0043 (JP)**

(72) Inventors:
• **Kanzaki, Akihiko**
**564-0024, Osaka (JP)**
• **Fujii, Yoshikazu**
**564-0024, Osaka (JP)**
• **Yamaguchi, Shigeru**
**581-0872, Osaka (JP)**

• **Miwa, Takahiro**
**569-0854, Osaka (JP)**
• **Hemmi, Akiko**
**533-0005, Osaka (JP)**

(74) Representative: **Henkel, Feiler & Hänzel**
**Patentanwälte**
**Maximiliansplatz 21**
**80333 München (DE)**

(56) References cited:
**US-A- 3 538 024        US-A- 5 641 855**
**US-A- 5 677 384**

• **P. G. RIGHETTI, S. HJERT[1]N: "High-Molecular-weight carrier ampholytes for isoelectric focusing of peptides" JOURNAL OF BIOCHEMICAL AND BIOPHYSICAL METHODS, vol. 5, no. 5, 1981, pages 259-272, XP002327314**

**Description**

The present invention relates to a novel polyalkylenimine-derived polymer and its production process and uses, wherein the polyalkylenimine-derived polymer is excellent in the dispersibility of such as liquid (particularly, water-soluble) dirt and dyes.

Hitherto, as to polymers which are addition products of unsaturated carboxylic acids to polyalkylenimine chains, N-alkylcarboxylic acid-ethylenimine polymers formed by alkylation of amino groups of polyethylenimines with the carboxylic acids have been disclosed as additive components of detergents (refer to patent documents 1 and 2 below).

[Patent Document 1] JP-B-020203/1973 (Kokoku)
[Patent Document 2] JP-A-286344/2003 (Kokai)

By the way, in recent years, as various detergents become higher-performance and more compact, performances (which are called redeposition inhibitability and dye transfer inhibitability) of, during the washing operation, efficiently dispersing the dirt (particularly, water-soluble dirt such as soy sauce, sauce, and black tea) and dyes to thus inhibit the dirt and dyes from redepositing themselves on the washing are becoming demanded. In addition, also as to water-treating agents, as the cooling water becomes higher concentrated, higher scale inhibitability is becoming demanded. Important for satisfying these demands are properties of being able to efficiently disperse fatty acids (which are causes of liquid dirt) and dyes. However, in those days when the art of the aforementioned patent publication 1 was developed, the subjects such as redeposition inhibitability and dye transfer inhibitability were not recognized. This prior art of the above publication is not an art developed in consideration about the dispersibility of the liquid dirt and dyes. In addition, the prior polymer as disclosed in the aforementioned patent publication 2 may exercise excellent dispersibility upon dirt of large-sized particulate solids such as clay. However, as to the dispersibility of the liquid dirt and dyes, this prior polymer is insufficient and therefore required to be further improved.

Thus, an object of the present invention is to provide a polyalkylenimine-derived polymer and its production process and uses, wherein the polyalkylenimine-derived polymer can efficiently disperse such as liquid (particularly, water-soluble) dirt and dyes and can exercise excellent performances in uses for such as detergents and water-treating agents.

The present inventors diligently studied to solve the above problems. As a result, they have found out that: as to a polymer which is an addition product of a carboxyalkyl group to a polyalkylenimine chain (which may hereinafter be referred to as "polyalkylenimine-derived polymer"), its molecular weight has a great influence on the dispersibility of such as liquid (particularly, water-soluble) dirt and dyes and, if the weight-average molecular weight is in a very high specific range, then the dispersibility of such as liquid (particularly, water-soluble) dirt and dyes is greatly enhanced.

However, as a result of the present inventors' attempt to obtain such a very high molecular weight polyalkylenimine-derived polymer by conventional processes (specifically, processes in which a high molecular weight polyalkylenimine is used as a raw material to carry out a Michael addition reaction of an unsaturated carboxylic acid to this polyalkylenimine), it has been found that there is a problem that the desired polymer cannot be obtained. Specifically, usually, in view of such as productivity, it has been general to carry out the reaction in a reaction concentration (raw material concentration), for example, of not less than 40 weight % (e.g. refer to JP-A-286344/2003 (Kokai)). Therefore, the present inventors also caused the high molecular weight polyalkylenimine and the unsaturated carboxylic acid to react together in a high reaction concentration of about 40 weight % in accordance with the above generality. However, when the reaction was carried out in such a high concentration, the gelation occurred during the reaction, thus resulting in failure to obtain the desired polymer. Thus, the present inventors studied about a process which could solve this problem to thus easily and surely obtain the aforementioned very high molecular weight polyalkylenimine-derived polymer. As a result, they have found out that it is important to set the reaction concentration (raw material concentration) in the optimum range. In detail, they have defined the upper limit of the reaction concentration (raw material concentration) as a specific value determined by the amounts of the polyalkylenimine and of the unsaturated carboxylic acid being used, and further have defined the lower limit of the reaction concentration (raw material concentration) as a specific value at which the productivity can be kept so high as to be permissible, and the reaction can be caused to proceed to such a degree that no unreacted raw material remain.

The present invention has been completed from these knowledge and findings.

That is to say, a polyalkylenimine-derived polymer according to the present invention is an addition product of a carboxyalkyl group to a polyalkylenimine chain and is in the range of 30,000 to 5,000,000 in weight-average molecular weight.

A process according to the present invention for production of a polyalkylenimine-derived polymer comprises a step of causing a polyalkylenimine of 20,000 to 1,000,000 in weight-average molecular weight and an unsaturated carboxylic acid to react together wherein the reaction is carried out under conditions where its reaction concentration is in the range of from 5 weight % up to an X value (weight %) determined by the following equation:

$$\text{X value (weight \%)} = 34 - (\text{ratio (mol \%) of unsaturated carboxylic acid}$$

$$\text{(mols) to be caused to react relative to all amino groups (mols) of polyalkylenimine}$$

$$\text{chain)/5.}$$

A detergent additive according to the present invention comprises, as an essential component, the aforementioned polyalkylenimine-derived polymer according to the present invention.

A detergent according to the present invention comprises, as an essential component, the aforementioned polyalkylenimine-derived polymer according to the present invention.

A water-treating agent according to the present invention comprises, as an essential component, the aforementioned polyalkylenimine-derived polymer according to the present invention.

A dispersant according to the present invention comprises, as an essential component, the aforementioned polyalkylenimine-derived polymer according to the present invention.

The present invention can provide: a polyalkylenimine-derived polymer which can efficiently disperse such as liquid (particularly, water-soluble) dirt and dyes and can exercise excellent performances in uses for such as detergent additives, detergents, water-treating agents, and dispersants; and a production process by which such a polymer can easily be obtained.

These and other objects and advantages of the present invention will be more fully apparent from the following detailed disclosure.

Hereinafter, detailed descriptions are given about the polyalkylenimine-derived polymer and its production process and uses according to the present invention. However, the scope of the present invention is not bound to these descriptions. And other than the following illustrations can also be carried out in the form of appropriate modifications of the following illustrations within the scope of the present invention.

[Polyalkylenimine-derived polymer]:

The polyalkylenimine-derived polymer according to the present invention is an addition product of a carboxyalkyl group to a polyalkylenimine chain. Hereupon, the carboxyalkyl group may be formed by an addition reaction either to a nitrogen atom of the polyalkylenimine chain or to a carbon atom of the polyalkylenimine chain. However, favorable from the viewpoint of the ease of the synthesis is a polymer which is an addition product of the carboxyalkyl group to the nitrogen atom of the polyalkylenimine chain. Incidentally, the polyalkylenimine-derived polymer according to the present invention can easily be obtained by the below-mentioned process according to the present invention for production of a polyalkylenimine-derived polymer. However, the polyalkylenimine-derived polymer according to the present invention is not limited to a polymer obtained by this production process according to the present invention. For example, the polyalkylenimine-derived polymer according to the present invention can be obtained also by, instead of the processes including a step of carrying out the Michael addition reaction of the unsaturated carboxylic acid to the polyalkylenimine, the following processes: a process including a step of causing chloroacetic acid to react with the polyalkylenimine; and a process including the following steps of carrying out Michael addition reactions of such as ester, amide and nitrile of the unsaturated carboxylic acid to the polyalkylenimine and then carrying out hydrolyses of the resultant products.

Examples of the aforementioned polyalkylenimine chain in the present invention include polyalkylenimines such as polyethylenimine and polypropylenimine. As these polyalkylenimines, branched ones are favorable. In particular, the ratio of tertiary amines among primary amines, secondary amines, and tertiary amines existing in the branched polyalkylenimine is favorably in the range of 1 to 50 mol %, more favorably 5 to 45 mol %, still more favorably 10 to 40 mol %. Incidentally, the ratio of tertiary amines in the branched polyalkylenimine can be measured by such as NMR analysis. As to the polyalkylenimine chain, only one kind may be included alone, or at least two kinds may be included in combinations with each other.

Examples of the aforementioned carboxyalkyl group in the present invention include a carboxymethyl group, a carboxyethyl group, a 1-methylcarboxyethyl group, a 2-methylcarboxyethyl group, a 2-hydroxycarboxyethyl group, a 2,3-dicarboxypropyl group, a 1,2-dicarboxyethyl group, and salts of carboxyl groups of these. Examples of the aforementioned salts include: alkaline metal salts (e.g. sodium salts, potassium salts); alkaline earth metal salts (e.g. magnesium salts, calcium salts); ammonium salts; and salts of organic amines (e.g. ethanolamine, triethylamine). As to the aforementioned carboxyalkyl group, only one kind may be included alone, or at least two kinds may be included in combinations with each other, but, favorably, at least two kinds are included in combinations with each other. Incidentally, when at least two kinds of carboxyalkyl groups are selected, the ratio of each carboxyalkyl group among the at least two kinds of carboxyalkyl groups is not especially limited. For example, it is recommended that the carboxyalkyl group of which the ratio is the smallest of the at least two kinds of carboxyalkyl groups is favorably not less than 1 mol %, more favorably not less than 5 mol %, still more favorably not less than 10 mol %, relative to the entirety of the at least two kinds of carboxyalkyl groups. As to favorable combinations in cases where the at least two kinds of carboxyalkyl groups are selected, a combination of the carboxyethyl group (salt) and the 1,2-dicarboxyethyl group (salt) is favorable from the viewpoint of such as the ease of the synthesis. In addition, hereupon, it is recommended that the ratio between the carboxyethyl group (salt) and the 1,2-dicarboxyethyl group (salt) is favorably in the range of carboxyethyl group (salt) : 1,2-dicarboxyethyl group (salt) = 1 : 99 to 99 : 1 (molar ratio), more favorably carboxyethyl group (salt) : 1,2-dicarboxyethyl group (salt) = 5 : 95 to 95 : 5 (molar ratio), still more favorably carboxyethyl group (salt) : 1,2-dicarboxyethyl group (salt) = 10 : 90 to 90 : 10 (molar ratio).

The amount of the aforementioned carboxyalkyl group having addition-reacted to the aforementioned polyalkylenimine chain is not especially limited. However, for example, in the case of the polymer which is an addition product of the carboxyalkyl group to the nitrogen atom of the polyalkylenimine chain, it is favorable, from the viewpoints of more enhancing the dispersibility of such as liquid (particularly, water-soluble) dirt and dyes and also excelling in the productivity, that the above polymer is an addition product of the carboxyalkyl group to amino groups of 1 to 99 mol %, favorably 3 to 90 mol %, more favorably 5 to 80 mol %, still more favorably 10 to 70 mol %, most favorably 15 to 60 mol %, of all nitrogen atoms of the polyalkylenimine chain.

As to the polyalkylenimine-derived polymer according to the present invention, it is important that its weight-average molecular weight is in the range of 100,000 to 5,000,000. Because of this, the above polymer can efficiently disperse such as liquid (particularly, water-soluble) dirt and dyes and exercises excellent performances in uses for such as detergents and water-treating agents. The weight-average molecular weight is recommended to be favorably in the range of 100,000 to 500,000. If the weight-average molecular weight is too large, then the handling is complicated. On the other hand, if the weight-average molecular weight is too small, then performances as a polymer are difficult to exercise, and the aforementioned effects of the present invention cannot sufficiently be displayed, and excellent performances cannot find their expressions in uses for such as detergents and water-treating agents.

The number-average molecular weight of the polyalkylenimine-derived polymer according to the present invention is recommended to be favorably in the range of 1,000 to 500,000, more favorably 2,000 to 400,000, still more favorably 3,000 to 300,000, particularly favorably 4,000 to 100,000, most favorably 5,000 to 50,000. If the number-average molecular weight is too large, then there is a possibility that the handling may be complicated. On the other hand, if the number-average molecular weight is too small, then there is a possibility that: performances as a polymer may be difficult to exercise, and the aforementioned effects of the present invention cannot sufficiently be displayed, and excellent performances cannot find their expressions in uses for such as detergents and water-treating agents.

Incidentally, as to the polyalkylenimine-derived polymer according to the present invention, it is favorable that its molecular weight has a multipeak property of not fewer than 2 (in other words, has not fewer than two peaks in the shape of the molecular weight distribution measured by GPC).

In the polyalkylenimine-derived polymer according to the present invention, a part or all of the aforementioned carboxyalkyl groups may be in the form of carboxylate salts by neutralization. Examples of the salts in the cases of the neutralized form include the same as the aforementioned salts of the carboxyalkyl group. In addition, the polyalkylenimine-derived polymer according to the present invention may be a further modified one. For example, it is possible that the polymer is provided with the hydrophobicity by its reaction with an alkyl halide, or that the polymers are bonded by a polyfunctional compound to thus increase the molecular weight.

The polyalkylenimine-derived polymer according to the present invention is favorably not higher than 20 weight % in content of the unsaturated carboxylic acid or its salt (which may hereinafter be referred to as "unsaturated carboxylic acid (salt)") as an impurity. More favorably, the content of the unsaturated carboxylic acid (salt) as an impurity is recommended not to be higher than 15 weight % and, still more favorably, the content of the unsaturated carboxylic acid (salt) as an impurity is recommended not to be higher than 10 weight %. If the content of the unsaturated carboxylic acid (salt) as an impurity is higher than 20 weight %, then there is a possibility that: the dispersibility of such as liquid (particularly, water-soluble) dirt and dyes may be spoiled, thus resulting in failure for excellent performances to find their expressions in uses for such as detergents and water-treating agents. Hereupon, the unsaturated carboxylic acid (salt) usually results in being contained as an impurity by a cause such that the unsaturated carboxylic acid or its salt used during the production remains without reacting. However, if the below-mentioned process according to the present invention for production of a polyalkylenimine-derived polymer is carried out, then the addition reaction can be caused to proceed with good reactivity, so almost no unreacted unsaturated carboxylic acid or salt of it remains, with the result that the polymer which is in the aforementioned range in content of the unsaturated carboxylic acid (salt) as an impurity can easily be obtained.

[Process for production of polyalkylenimine-derived polymer]:

The process according to the present invention for production of a polyalkylenimine-derived polymer comprises a step of causing a polyalkylenimine and an unsaturated carboxylic acid to react together. Specifically, it will do to carry out a Michael addition reaction of the unsaturated carboxylic acid (for introducing the carboxyalkyl group) to the polyalkylenimine aforementioned in the section hereof headed "[Polyalkylenimine-derived polymer]".

Examples of the aforementioned unsaturated carboxylic acid include acrylic acid, methacrylic acid, $\alpha$-hydroxyacrylic acid, itaconic acid, maleic acid, fumaric acid, crotonic acid, citraconic acid, and their salts and acid anhydrides. Examples of the aforementioned salts include: alkaline metal salts (e.g. sodium salts, potassium salts); alkaline earth metal salts (e.g. magnesium salts, calcium salts); ammonium salts; and salts of organic amines (e.g. ethanolamine, triethylamine). Of these unsaturated carboxylic acids, only one kind may be used alone, or at least two kinds may be used in combinations with each other.

As to the process according to the present invention for production of a polyalkylenimine-derived polymer, it is important that a polyalkylenimine of 70,000 to 1,000,000 in weight-average molecular weight is used as the aforementioned polyalkylenimine. Because of this, the polyalkylenimine-derived polymer in the range of 100,000 to 5,000,000 in weight-average molecular weight can easily be obtained. The weight-average molecular weight of the aforementioned polyalkylenimine is recommended to be favorably in the range of 70,000 to 200,000. If the weight-average molecular weight of the polyalkylenimine is too large, then the addition reaction efficiency of the unsaturated carboxylic acid is low, so that a large amount of unreacted unsaturated carboxylic acid (salt) is contained as an impurity in the resultant polymer, or that the productivity is low. On the other hand, if the weight-average molecular weight of the polyalkylenimine is too small, then such as redeposition inhibitability and washing effects which can be exercised by the resultant polymer are insufficient.

The number-average molecular weight of the aforementioned polyalkylenimine, which is used in the process according to the present invention for production of a polyalkylenimine-derived polymer, is favorably in the range of 6,000 to 100,000, more favorably 6,500 to 80,000, and, industrially, it is more favorably in the range of 7,000 to 60,000, still more favorably 7,500 to 50,000, particularly favorably 8,000 to 40,000, most favorably 8,500 to 30,000. If the number-average molecular weight of the polyalkylenimine is too large, then there is a tendency such that the addition reaction efficiency of the unsaturated carboxylic acid is low, so that a large amount of unreacted unsaturated carboxylic acid (salt) is contained as an impurity in the resultant polymer, or that the productivity is low. On the other hand, if the number-average molecular weight of the polyalkylenimine is too small, then there is a possibility that such as redeposition inhibitability and washing effects which can be exercised by the resultant polyalkylenimine-derived polymer may be insufficient.

The ratio between the aforementioned polyalkylenimine and the aforementioned unsaturated carboxylic acid, which are used in the addition reaction when carrying out the Michael addition reaction of the aforementioned unsaturated carboxylic acid to the aforementioned polyalkylenimine, is not especially limited. This ratio will do if it is set appropriately so that the amount of the carboxyalkyl group having addition-reacted to the polyalkylenimine chain of the resultant polyalkylenimine-derived polymer will be in the range aforementioned in the section hereof headed "[Polyalkylenimine-derived polymer]".

In the process according to the present invention for production of a polyalkylenimine-derived polymer, the reaction is carried out under conditions where its reaction concentration (wherein the reaction concentration refers to a raw material concentration and is determined by "(total weight of polyalkylenimine and unsaturated carboxylic acid)/ (total weight of all components of reaction system (polyalkylenimine, unsaturated carboxylic acid, and other components used if necessary such as solvent)) x 100") is in the range of from 5 weight % up to an X value (weight %) determined by the following equation:

$$X \text{ value (weight \%)} = 34 - \text{(ratio (mol \%) of unsaturated carboxylic acid (mols) to be caused to react relative to all amino groups (mols) of polyalkylenimine chain)}/5.$$

If the reaction concentration is less than 5 weight %, then it is so difficult for the reaction to proceed that: a large amount of unreacted unsaturated carboxylic acid (salt) remains or the yield is poor, thus resulting in greatly low productivity. On the other hand, if the reaction concentration is more than the aforementioned X value, then the gelation occurs during the reaction, thus resulting in failure to obtain the desired polymer. Specifically, usually, in view of such as productivity, it is general to carry out the reaction in a reaction concentration, for example, of not less than 40 weight %. However, if the reaction is carried out in such a high concentration in cases where an attempt is made to obtain the aforementioned very high molecular weight polymer, then the gelation occurs during the reaction. As to the lower limit of the reaction concentration, from the viewpoint of shortening the reaction time, the reaction concentration is more favorably set at not less than 6 weight %, still more favorably not less than 7 weight %, particularly favorably not less than 8 weight %, most favorably not less than 10 weight %. In addition, the upper limit of the reaction concentration is recommended to favorably be set at (X value aforementioned - 1) weight %, more favorably (X value aforementioned - 2) weight %.

Particularly, in cases where the ratio between the aforementioned polyalkylenimine and the aforementioned unsaturated carboxylic acid being used is set so that the ratio (mol %) of the unsaturated carboxylic acid (mols) to be caused to react relative to all amino groups (mols) of the polyalkylenimine chain will be in the range of from 10 mol % up to 50 mol %, then the reaction concentration (raw material concentration) is favorably in the range of 5 to 34 weight %, more favorably 8 to 33 weight %, still more favorably 10 to 32 weight %, particularly favorably 12 to 31 weight %, most favorably 15 to 30 weight %. On the other hand, in cases where the ratio between the aforementioned polyalkylenimine and the aforementioned unsaturated carboxylic acid being used is set so that the ratio (mol %) of the unsaturated carboxylic acid (mols) to be caused to react relative to all amino groups (mols) of the polyalkylenimine chain will be in the range of from 1 mol % up to less than 10 mol %, then the reaction concentration (raw material concentration) is favorably in the range of 5 to 80 weight %, more favorably 10 to 70 weight %, still more favorably 15 to 60 weight %, particularly favorably 20 to 50 weight %, most favorably 25 to 40 weight %.

The addition reaction, when carrying out the Michael addition reaction of the aforementioned unsaturated carboxylic acid to the aforementioned polyalkylenimine, is not especially limited. However, it is favorably a solution reaction. In this case, the reaction may be carried out either under stirred conditions or static conditions.

The solvent in the aforementioned solution reaction is recommended to be favorably an aqueous solvent, more favorably water. In addition, a solvent other than the aqueous solvent may be added appropriately within the range of not more than 10 weight %. As the aqueous solvent, specifically, it is possible to use one or more members selected appropriately from the group consisting of such as: lower alcohols (e.g. methanol, ethanol, isopropyl alcohol); amides (e.g. dimethylformamide); and ethers (e.g. diethyl ether, dioxane).

When the aforementioned solution reaction is carried out, the pH of the reaction solution is not especially limited. However, in the Michael addition reaction, generally, as the pH becomes higher, the reactivity becomes better. Therefore, though depending on the solubilities of the raw materials, the pH is recommended to favorably be set at not less than 3, more favorably not less than 5, still more favorably not less than 7, particularly favorably not less than 9, most favorably not less than 10. The aqueous solution of the raw polyalkylenimine is alkaline. Therefore, if the ratio of the unsaturated carboxylic acid to be caused to carry out the addition reaction is small, then there are cases where the pH of the reaction solution is not less than 3. Therefore, the adjustment of the pH is not always needed. However, in cases where the adjustment of the pH is needed, such as where the ratio of the unsaturated carboxylic acid to be caused to carry out the addition reaction is high and where the raw polyalkylenimine is neutralized with an acid in advance, then it is favorable to carry out the adjustment of the pH with such as alkaline metal hydroxides (e.g. sodium hydroxide, potassium hydroxide), alkaline earth metal hydroxides (e.g. magnesium hydroxide, calcium hydroxide), ammonia, or organic amines (e.g. ethanolamine, triethylamine), and it is particularly favorable to use the alkaline metal hydroxides.

When the Michael addition reaction of the aforementioned unsaturated carboxylic acid to the aforementioned polyalkylenimine is carried out, the aforementioned polyalkylenimine and the aforementioned unsaturated carboxylic acid may be charged all in a lump. Or it is also permitted that: either one of them is initially charged, and then the other is dropwise added. Or both may be dropwise added. In cases where an unsaturated carboxylic acid having comparatively high polymerizability, such as monocarboxylic acid (e.g. acrylic acid), is used, it is favorable that: the polyalkylenimine is initially charged, and then such as acrylic acid is dropwise added, In cases where an unsaturated carboxylic acid having comparatively low reactivity, such as dicarboxylic acid (e.g. maleic acid), is used, it is favorable that this unsaturated carboxylic acid is initially charged.

When the Michael addition reaction of the aforementioned unsaturated carboxylic acid to the aforementioned polyalkylenimine is carried out, basically no catalyst is needed. However, if necessary, the catalyst may appropriately be used, provided that it has no bad influence on the reaction.

When the Michael addition reaction of the aforementioned unsaturated carboxylic acid to the aforementioned polyalkylenimine is carried out, a polymerization inhibitor may be used. Particularly, in cases where an unsaturated carboxylic acid having high polymerizability, such as acrylic acid, is used, then it is favorable to use the polymerization inhibitor. Examples of the polymerization inhibitor include hydroquinone, methoquinone, and phenothiazine. As the amount of the polymerization inhibitor being used, the polymerization inhibitor is added favorably in an amount of 1 to 1,000 ppm relative to the unsaturated carboxylic acid. However, in cases where the pH of the aqueous solution of the resultant polyalkylenimine-derived polymer is set at not less than 12, then, because there are cases where the coloring of the aqueous solution occurs, it is favorable that the amount of the polymerization inhibitor being added is set at not larger than 300 ppm relative to the unsaturated carboxylic acid.

The reaction temperature, when carrying out the Michael addition reaction of the aforementioned unsaturated carboxylic acid to the aforementioned polyalkylenimine, is not especially limited. However, it is favorably set in the range of 20 to 120 °C. Particularly, in cases where an unsaturated carboxylic acid having high polymerizability, such as acrylic acid, is used, then, for preventing the side reaction caused by the polymerization, a somewhat low temperature is preferable and, for example, the reaction temperature is favorably set in the range of 30 to 110 °C, more favorably 40 to 105 °C, still more favorably 50 to 100 °C. On the other hand, in cases where an unsaturated carboxylic acid having comparatively low reactivity, such as dicarboxylic acid (e.g. maleic acid), is used, then, for accelerating the reaction, a high temperature is preferable and, for example, the reaction temperature is favorably set in the range of 50 to 120 °C, more favorably 60 to 110 °C, still more favorably 70 to 100 °C.

In cases where either one or both of the polyalkylenimine and the unsaturated carboxylic acid are dropwise added when the Michael addition reaction of the aforementioned unsaturated carboxylic acid to the aforementioned polyalkylenimine is carried out, then the temperature during the dropping addition is not especially limited. However, for shortening the reaction time, a high temperature is preferable. For example, in cases where the unsaturated carboxylic acid is dropwise added, then the temperature during the dropping addition is favorably set in the range of 15 to 110 °C, more favorably 20 to 105 °C, still more favorably 30 to 100 °C. Furthermore, in cases where either one or both of the polyalkylenimine and the unsaturated carboxylic acid are dropwise added, then it is favorable to carry out the reaction in a way that not lower than 90 °C is maintained constantly during a period of from the beginning of the dropping addition till the end of the reaction.

The reaction time, when carrying out the Michael addition reaction of the aforementioned unsaturated carboxylic acid to the aforementioned polyalkylenimine, is not especially limited. However, it is favorably set in the range of 10 minutes to 50 hours, more favorably 15 minutes to 40 hours, still more favorably 30 minutes to 30 hours.

In cases where an unsaturated carboxylic acid having high polymerizability, such as acrylic acid, is used when the Michael addition reaction of the aforementioned unsaturated carboxylic acid to the aforementioned polyalkylenimine is carried out, then, for preventing the polymerization reaction; it is favorable to carry out the reaction under an air atmosphere. In addition, for preventing the coloring of the resultant polymer, it is favorable to carry out the reaction under a nitrogen atmosphere. Therefore, the atmosphere in the Michael addition reaction will do if it is set appropriately for the object of the use of the resultant polymer. Incidentally, the reaction may be carried out under any of a normal pressure (atmospheric pressure), an increased pressure, and a reduced pressure.

When the Michael addition reaction of the aforementioned unsaturated carboxylic acid to the aforementioned polyalkylenimine is carried out, the aforementioned unsaturated carboxylic acid may be caused to react either in a unneutralized form or in a partially or entirely neutralized form. In addition, the neutralization may be carried out after the Michael addition reaction. In this case, it will do to use such as alkaline metal hydroxides (e.g. sodium hydroxide, potassium hydroxide), alkaline earth metal hydroxides (e.g. magnesium hydroxide, calcium hydroxide), ammonia, or organic amines (e.g. ethanolamine, triethylamine).

Incidentally, after the Michael addition reaction of the aforementioned unsaturated carboxylic acid to the aforementioned polyalkylenimine has been carried out, the resultant polymer may further be modified. For example, it is possible that the polymer is provided with the hydrophobicity by its reaction with an alkyl halide, or that the polymers are bonded by a polyfunctional compound to thus increase the molecular weight.

[Detergent and detergent additive]:

The detergent and the detergent additive, according to the present invention, comprise, as an essential component, the aforementioned polyalkylenimine-derived polymer according to the present invention. Because of this, the above detergent and detergent additive can efficiently disperse liquid (particularly, water-soluble) dirt and dyes to thus inhibit the dirt and dyes from redepositing themselves on the washing and exercises excellent redeposition inhibitability and dye transfer inhibitability as a detergent or a detergent additive.

The content for which the aforementioned polyalkylenimine-derived polymer accounts in the detergent according to the present invention is favorably in the range of 0.01 to 50 weight %, more favorably 0.05 to 30 weight %, still more favorably 0.1 to 20 weight %, particularly favorably 0.3 to 15 weight %, most favorably 0.5 to 10 weight %. If the content of the aforementioned polyalkylenimine-derived polymer is too high, then there is a possibility that the detergent may color. On the other hand, if the content of the aforementioned polyalkylenimine-derived polymer is too low, then there is a possibility that the redeposition inhibitability or the dye transfer inhibitability cannot sufficiently be exercised.

The content for which the aforementioned polyalkylenimine-derived polymer accounts in the detergent additive according to the present invention is not especially limited. This content will do if it is set appropriately so that the content for which the aforementioned polyalkylenimine-derived polymer accounts in the detergent to which the above detergent additive is to be added will be in the aforementioned range.

The detergent according to the present invention may be in any form of such as powder, liquid, and gel. Hereinafter, detailed descriptions are given about, as typical examples, a powder detergent in the form of a powder and a liquid detergent in the form of a liquid.

In cases where the detergent according to the present invention is the powder detergent, the weight-average molecular weight of the aforementioned polyalkylenimine-derived polymer is recommended to be favorably in the range of 30,000 to 5,000,000, more favorably 40,000 to 1,000,000, still more favorably 50,000 to 800,000. On the other hand, in cases where the detergent according to the present invention is the liquid detergent, the weight-average molecular weight of the aforementioned polyalkylenimine-derived polymer is recommended to be favorably in the range of 30,000 to 4,000,000, more favorably 40,000 to 1,000,000, still more favorably 50,000 to 600,000.

The detergent according to the present invention, favorably, further comprises at least one member (hereinafter referred to as "component A") selected from the group consisting of poly(carboxylic acids) (salts), citrate salts, zeolite, and layered silicates. Particularly, in cases where the detergent according to the present invention is the powder detergent, the aforementioned component A is needed for exercising excellent washing effects and redeposition inhibitability. On the other hand, in cases where the detergent according to the present invention is the liquid detergent, the aforementioned component A does not necessarily need to be contained. However, also in such cases, the washing effects and the redeposition inhibitability can be more enhanced by containing the component A. Incidentally, in cases where the detergent according to the present invention is the liquid detergent and where this liquid detergent is desired to be a transparent one, it is favorable to select at least one member from the group consisting of poly(carboxylic acids) (salts), citrate salts, and layered silicates among the aforementioned components A.

Examples of the aforementioned poly(carboxylic acids) (salts) include poly(acrylic acids), acrylic acid-maleic acid copolymers, poly(glyoxylic acids), aminocarboxylic polymers (e.g. poly(aspartic acids)), and their salts. Examples of the aforementioned salts include sodium salts, potassium salts, and ammonium salts. Incidentally, the weight-average molecular weights of these poly(carboxylic acids) (salts) are favorably in the range of 500 to 200,000, more favorably 1,000 to 100,000, still more favorably 2,000 to 50,000.

Examples of the aforementioned citrate salts include sodium citrate.

Examples of the aforementioned zeolite include hydrated zeolites A, X, B, and HS.

Examples of the aforementioned layered silicates include layered sodium silicate.

In cases where the detergent according to the present invention is the powder detergent, the content for which the aforementioned components A account in the detergent is favorably in the range of 0.1 to 50 weight %, more favorably 0.5 to 40 weight %, still more favorably 1 to 30 weight %, in total of the aforementioned components A. If the total content of the aforementioned components A is too high, then the surface activity tends to be low. On the other hand, if the total content of the aforementioned components A is too low, then there is a possibility that the washing effects or the redeposition inhibitability cannot sufficiently be exercised. Incidentally, in cases where the detergent according to the present invention is the powder detergent, the content of each of the components A will do if it is set appropriately for its kind. However, for example, in cases of the poly(carboxylic acids) (salts) and the citrate salts, the content of each of them is favorably in the range of 0 to 30 weight %. In cases of the zeolite and the layered silicates, the content of each of them is favorably in the range of 0 to 50 weight %.

In cases where the detergent according to the present invention is the liquid detergent, the content for which the aforementioned components A account in the detergent is favorably in the range of 0 to 50 weight %, more favorably 0 to 40 weight %, still more favorably 0 to 30 weight %, in total of the aforementioned components A. If the total content of the aforementioned components A is too high, then the surface activity tends to be low. On the other hand, if the total content of the aforementioned components A is too low, then there is a possibility that the washing effects or the redeposition inhibitability cannot sufficiently be exercised. Incidentally, in cases where the detergent according to the present invention is the liquid detergent, the content of each of the components A will do if it is set appropriately for its kind. However, for example, in cases of the poly(carboxylic acids) (salts), the citrate salts, and the layered silicates, the content of each of them is favorably in the range of 0 to 30 weight %. In cases of the zeolite, its content is favorably in the range of 0 to 20 weight %.

The detergent according to the present invention may further comprise a surfactant which is conventionally contained in detergents. Specific examples of the surfactant include anionic surfactants, nonionic surfactants, cationic surfactants and amphoteric surfactants. Of these, one or more kinds can be used.

Specific examples of the aforementioned anionic surfactants include alkylbenzenesulfonate salts, alkyl or alkenyl ether sulfate salts, alkyl or alkenyl sulfate salts, $\alpha$-olefinsulfonate salts, $\alpha$-sulfofatty acids or their ester salts, alkanesulfonate salts, saturated or unsaturated fatty acid salts, alkyl or alkenyl ether carboxylate salts, amino acid type surfactants, N-acylamino acid type surfactants, and alkyl or alkenyl phosphate esters or their salts.

Examples of the aforementioned nonionic surfactants include polyoxyalkylene alkyl or alkenyl ethers, polyoxyethylene alkyl phenyl ethers, higher fatty acid alkanolamides or their alkylene oxide addition products, sucrose fatty acid esters, alkyl glycoxides, fatty acid glycerol monoesters, and alkylamine oxides.

Examples of the aforementioned cationic surfactants include quaternary ammonium salts.

Examples of the aforementioned amphoteric surfactants include carboxyl type or sulfobetaine type amphoteric surfactants.

In cases where the detergent according to the present invention is the powder detergent, the content for which the aforementioned surfactant accounts in the detergent is not especially limited. However, usually, this content is favorably set in the range of 3 to 50 weight %, more favorably 5 to 40 weight %, still more favorably 10 to 35 weight %. If the content of the surfactant is too high, then the economy tends to be low. On the other hand, if the content of the surfactant is too low, then there is a possibility that the detergency cannot sufficiently be exercised.

In cases where the detergent according to the present invention is the liquid detergent, the content for which the aforementioned surfactant accounts in the detergent is favorably set in the range of 3 to 60 weight %, more favorably 5 to 50 weight %, still more favorably 10 to 40 weight %. If the content of the surfactant is too high, then there are disadvantages in that: the compatibility tends to be low, and also the economy is low. On the other hand, if the content of the surfactant is too low, then there is a possibility that the detergency cannot sufficiently be exercised.

The detergent according to the present invention and the detergent additive according to the present invention may further comprise a hitherto publicly known detergent builder. The detergent builder is not especially limited. However, its examples include: polyethylene glycol; sodium tripolyphosphate; sodium pyrophosphate; sodium silicate; sodium carbonate; sodium sulfate; sodium nitrilotriacetate; sodium- or potassium ethylenediaminetetraacetate; carboxylic polymers of polysaccharides; and water-soluble polymers such as fumaric acid (co)polymer salts. Incidentally, in cases where these detergent builders are also contained, the content of them will do if it is set appropriately within the range not damaging the effects of the present invention.

The detergent according to the present invention and the detergent additive according to the present invention may further comprise various additives which are conventionally used for detergents. Specific examples thereof include: sodium carboxymethyl cellulose for inhibiting the redeposition of contaminants; soil-preventing agents (e.g. benzotriazole, ethylene-thiourea); alkali agents (e.g. alkaline substances for pH adjustment); perfumes; fluorescent agents; colorants; bubble-generating agents; bubble-stabilizing agents; lustering agents; fungicides; bleaching agents (e.g. sodium percarbonate, sodium perborate); bleach activators (e.g. nonanoyloxybenzenesulfonate salts, tetraacetylethylenediamine); enzymes; dyes; and solvents (e.g. water). Incidentally, in cases where these additives are also contained, the content of them will do if it is set appropriately within the range not damaging the effects of the present invention.

In cases where the detergent according to the present invention is the liquid detergent, then, for enhancing the detergency, the redeposition inhibitability and the dye transfer inhibitability, it is particularly favorable that this detergent contains the alkali agent among the aforementioned additives. Though not especially limited, examples of the alkali agent include sodium hydroxide, potassium hydroxide, alkanolamines (e.g. monoethanolamine, diethanolamine), silicates, and carbonates. In such cases, the content of the alkali agent in the detergent is favorably in the range of 0.1 to 20 weight %, more favorably 0.5 to 15 weight %, still more favorably 1 to 10 weight %. If the alkali agent is less than 0.1 weight %, then the washing effects and the redeposition inhibitability tend to be difficult to sufficiently exercise. On the other hand, if the alkali agent is more than 20 weight %, then there is an unfavorable possibility that such as skin chapping may occur in cases of contact with skin.

Incidentally, the detergent according to the present invention may be a detergent intermediate, namely, such as is used as a detergent by further adding thereto another component (e.g. enzyme, perfume) which is needed for the detergent. Or the detergent according to the present invention may be a detergent itself, namely, such as is used as a detergent in a state left as it is.

The detergent according to the present invention and the detergent additive according to the present invention are usable as and for, respectively, various detergents such as for clothes, shampoos, body soap, wash-tanks, baths, toilets, floors, carpets, kitchens, tableware, glass, shoes, automobiles, drainpipes, air conditioners, shavers, teeth brushing, and spectacles.

[Water-treating agent]:

The water-treating agent according to the present invention comprises, as an essential component, the aforementioned polyalkylenimine-derived polymer according to the present invention. Because of this, the above water-treating agent can efficiently disperse scale-forming substances and contamination (e.g. sludge)-causing substances (e.g. water-soluble organic compounds decomposed by such as germs and organic fungicides) and exercises excellent scale inhibitability as a water-treating agent.

The content for which the aforementioned polyalkylenimine-derived polymer accounts in the water-treating agent according to the present invention is favorably in the range of 1 to 100 weight %, more favorably 5 to 95 weight %, still more favorably 10 to 90 weight %. If the content of the aforementioned polyalkylenimine-derived polymer is lower than 1 weight %, then the performances cannot sufficiently be exercised.

The weight-average molecular weight of the aforementioned polyalkylenimine-derived polymer in the water-treating agent according to the present invention is favorably not more than 500,000, more favorably not more than 300,000, still more favorably not more than 100,000.

If necessary, the water-treating agent according to the present invention may further comprise another polymer besides the aforementioned palyalkylenimine-derived polymer within the range not damaging the effects of the present invention. Though not especially limited, examples of the above polymer other than the aforementioned polyalkylenimine-derived polymer include acrylic polymers and sulfonic polymers.

[Dispersant]:

The dispersant according to the present invention comprises, as an essential component, the aforementioned polyalkylenimine-derived polymer according to the present invention. Because of this, the above dispersant exercises excellent dispersibility.

The content for which the aforementioned polyalkylenimine-derived polymer accounts in the dispersant according to the present invention is not limited. However, this content is, for example, favorably in the range of 5 to 100 weight %. If the content of the aforementioned polyalkylenimine-derived polymer is lower than 5 weight %, then the dispersing effect cannot sufficiently be exercised.

If necessary, the dispersant according to the present invention may further comprise a publicly known water-soluble polymer as another component besides the aforementioned polyalkylenimine-derived polymer within the range not damaging the effects of the present invention. Though not especially limited, examples of the above other component include polymerized phosphoric acid and its salts, phosphonic acid and its salts, and poly(vinyl alcohol).

The dispersant according to the present invention is usable as various dispersants, for example, dispersants for inorganic pigments such as heavy or light calcium carbonate (as used for paper coating) and clay. In cases where the dispersant according to the present invention is used as the inorganic-pigment dispersant, the amount of this dispersant being used is favorably in the range of 0.05 to 2.0 weight parts per 100 weight parts of the inorganic pigment. If the amount of the dispersant being used is smaller than 0.05 weight part, then the dispersing effect cannot sufficiently be obtained. On the other hand, if the amount of the dispersant being used is larger than 2.0 weight parts, there is unfavorably a possibility of disadvantages also in economical aspects because the effect rewarding the amount of the addition is not obtained any longer.

Hereinafter, the present invention is more specifically illustrated by the following Examples of some preferred embodiments. However, the present invention is not limited to these. Hereinafter, unless otherwise noted, the units "weight part(s)" and "weight %" are referred to simply as "part(s)" and "%" respectively.

The gel permeation chromatography (GPC) analyses in the following Examples and Comparative Examples were measured under the following conditions

> Device: L-7000 series, produced by Hitachi Co., Ltd.
> Detector: RI, UV (254 nm)
> Columns: "SB-G" + "SB-804HQ" + "SB-803HQ" + "SB-802.5HQ", produced by SHODEX
> Column temperature: 40 °C
> Calibration curve: drawn by using "molecular weight standards Polyethylene Glycol (model Nos. 2070-4, 2070-6, 2070-7, 2071-0, 2071-1)" and "molecular weight standards Polyethylene Oxide (model Nos. 2083-3, 2083-5, 2083-7, 2084-0)" (produced by GL Science) to approximate relations between logarithms (log Mp) and retention times of their peak top molecular weights (Mp) with a cubic equation.
> GPC software: "BORWIN" produced by JASCO Corporation
> Eluent: 0.5M acetic acid + 0.5M sodium acetate
> Flow rate: 0.8 mL/min

[Example 1]:

An amount of 30 g of a 30 % aqueous polyethylenimine (weight-average molecular weight: 98,200, number-average molecular weight: 11,800) solution (all amino groups of polyethylenimine chain: 209 mmol) was charged into a glass reactor as equipped with a thermometer and a stirrer. Then, 34.8 g of pure water was added thereto to carry out dissolution. The resultant aqueous polyethylenimine solution was heated to a temperature of 50 °C, and then 6.6 g of a 80 % aqueous acrylic acid solution (acrylic acid 73 mmol; 35 mol % relative to all amino groups of polyethylenimine) was dropwise added thereto under stirring over a period of 30 minutes. After the end of this dropping addition, the resultant mixture was caused to react at 50 °C for 24 hours, thus obtaining a polyethylenimine-derived polymer in the form of an aqueous polymer solution of 21 % in solid component content. In this reaction, the X value (value as determined by "34 - (ratio (mol %) of unsaturated carboxylic acid (mols) to be caused to react relative to all amino groups (mols) of polyalkylenimine chain)/5" (hereinafter the same)) was 27 % and, in comparison, the reaction concentration was 20 %.

From the GPC analysis result of the resultant aqueous polymer solution, it was found that the content of acrylic acid existing as an impurity in the resultant polymer was 4.8 % in terms of solid component content (i.e. ratio (%) of (solid component) weight of acrylic acid to (entire solid components) weight of polymer). In addition, from the GPC analysis result, it was found that the resultant polyethylenimine-derived polymer was 284,000 in weight-average molecular weight and 13,300 in number-average molecular weight.

A portion of the aqueous polymer solution of the resultant polyethylenimine-derived polymer was sampled, and then sodium hydroxide was added thereto in a molar amount equal to the carboxyl groups of the polymer, and then the resultant solution was dried under reduced pressure at room temperature, thus obtaining a white solid. This solid was dissolved into heavy water and then measured by $^1$H-NMR. Its result was as follows:

$^1$H-NMR ($\delta$ in $D_2O$): 2.2 ppm (2H), 2.5 ppm (14.9H)

From this result, it was clear that the resultant polyethylenimine-derived polymer was an addition product of acrylic acid to 31 mol % of all amino groups of the polyethylenimine chain.

[Example 2]:

An amount of 4.1 g (42 mmol; 5 mol % relative to all amino groups of polyethylenimine) of maleic anhydride and 80.1 g of pure water were charged into a glass reactor as equipped with a thermometer and a stirrer. Then, dissolution was carried out by stirring. To the resultant aqueous maleic acid solution, there was added 120 g of a 30 % aqueous polyethylenimine (weight-average molecular weight: 98,200, number-average molecular weight: 11,800) solution (all amino groups of polyethylenimine chain: 837 mmol) under stirring to mix them together. The resultant mixture was heated to its boiling point so as to be in a reflux state. While this reflux state was maintained, the mixture was cause to react for 12 hours, thus obtaining a polyethylenimine-derived polymer in the form of an aqueous polymer solution of 22 % in solid component content. In this reaction, the X value was 33 % and, in comparison, the reaction concentration was 20 %.

From the GPC analysis result of the resultant aqueous polymer solution, it was found that the content of fumaric acid existing as an impurity in the resultant polymer was 0.9 % in terms of solid component content (i.e. ratio (%) of (solid component) weight of fumaric acid to (entire solid components) weight of polymer). In addition, from the GPC analysis result, it was found that the resultant polyethylenimine-derived polymer was 140,000 in weight-average molecular weight and 9,700 in number-average molecular weight.

The resultant polyethylenimine-derived polymer was measured by $^1$H-NMR in the same way as of Example 1. Its result was as follows:

$^1$H-NMR ($\delta$ in $D_2O$): 2.1 to 2.4 ppm (2H), 2.5 ppm (88H), 3.25 ppm (1H)

From this result, it was clear that the resultant polyethylelenimine-derived polymer was an addition product of maleic acid to 4.6 mol % of all amino groups of the polyethylenimine chain.

[Example 3]:

A polyethylenimine-derived polymer was obtained in the form of an aqueous polymer solution of 24 % in solid component content in the same way as of Example 2 except that: the amount of the 30 % aqueous polyethylenimine solution being used was changed to 110 g (all amino groups of polyethylenimine chain: 767 mmol), and the amount of the maleic anhydride being used was changed to 7.5 g (77 mmol; 10 mol % relative to all amino groups of polyethylenimine), and the amount of the pure water being used was changed to 91.9 g. In this reaction, the X value was 32 % and, in comparison, the reaction concentration was 20 %.

From the GPC analysis result of the resultant aqueous polymer solution, it was found that the content of fumaric acid existing as an impurity in the resultant polymer was 1.9 % in terms of solid component content (i.e. ratio (%) of (solid component) weight of fumaric acid to (entire solid components) weight of polymer). In addition, from the GPC analysis result, it was found that the resultant polyethylenimine-derived polymer was 350,000 in weight-average molecular weight and 11,000 in number-average molecular weight.

The resultant polyethylenimine-derived polymer was measured by $^1$H-NMR in the same way as of Example 1. Its result was as follows:

$^1$H-NMR ($\delta$ in $D_2O$): 2.1 to 2.4 ppm (2H), 2.5 ppm (45H), 3.25 ppm (1H)

From this result, it was clear that the resultant polyethylenimine-derived polymer was an addition product of maleic acid to 8.9 mol % of all amino groups of the polyethylenimine chain.

[Example 4]:

A polyethylenimine-derived polymer was obtained in the form of an aqueous polymer solution of 21 % in solid component content in the same way as of Example 2 except that: the amount of the 30 % aqueous polyethylenimine solution being used was changed to 80 g (all amino groups of polyethylenimine chain: 558 mmol), and the amount of the maleic anhydride being used was changed to 13.7 g (140 mmol; 25 mol % relative to all amino groups of polyethylenimine), and the amount of the pure water being used was changed to 107.3 g. In this reaction, the X value was 29 % and, in comparison, the reaction concentration was 20 %.

From the GPC analysis result of the resultant aqueous polymer solution, it was found that the content of fumaric acid existing as an impurity in the resultant polymer was 5.1 % in terms of solid component content (i.e. ratio (%) of (solid component) weight of fumaric acid to (entire solid components) weight of polymer). In addition, from the GPC analysis result, it was found that the resultant polyethylenimine-derived polymer was 247,000 in weight-average molecular weight and 12,500 in number-average molecular weight.

The resultant polyethylenimine-derived polymer was measured by $^1$H-NMR in the same way as of Example 1. Its result was as follows:

$^1$H-NMR ($\delta$ in $D_2O$): 2.1 to 2.4 ppm (2H), 2.5 ppm (18H), 3.25 ppm (1H)

From this result, it was clear that the resultant polyethylenimine-derived polymer was an addition product of maleic acid to 22 mol % of all amino groups of the polyethylenimine chain.

[Example 5]:

A polyethylenimine-derived polymer was obtained in the form of an aqueous polymer solution of 21 % in solid component content in the same way as of Example 2 except that: the amount of the 30 % aqueous polyethylenimine solution being used was changed to 70 g (all amino groups of polyethylenimine chain: 488 mmol), and the amount of the maleic anhydride being used was changed to 16.8 g (171 mmol; 35 mol % relative to all amino groups of polyethylenimine), and the amount of the pure water being used was changed to 117.4 g. In this reaction, the X value was 27 % and, in comparison, the reaction concentration was 20 %.

From the GPC analysis result of the resultant aqueous polymer solution, it was found that: the content of fumaric acid existing as an impurity in the resultant polymer was 8.5 % in terms of solid component content (i.e. ratio (%) of (solid component) weight of fumaric acid to (entire solid components) weight of polymer), and the content of maleic acid existing as an impurity in the resultant polymer was 0.5 % in terms of solid component content (i.e. ratio (%) of (solid component) weight of maleic acid to (entire solid components) weight of polymer). In addition, from the GPC analysis result, it was found that the resultant polyethylenimine-derived polymer was 369,000 in weight-average molecular weight and 12,700 in number-average molecular weight.

The resultant polyethylenimine-derived polymer was measured by $^1$H-NMR in the same way as of Example 1. Its result was as follows:

$^1$H-NMR ($\delta$ in $D_2O$): 2.1 to 2.4 ppm (2H), 2.5 ppm (14H), 3.25 ppm (1H)

From this result, it was clear that the resultant polyethylenimine-derived polymer was an addition product of maleic acid to 28 mol % of all amino groups of the polyethylenimine chain.

[Example 6]:

A polyethylenimine-derived polymer was obtained in the form of an aqueous polymer solution of 21 % in solid component content in the same way as of Example 1 except that: the amount of the 80 % aqueous acrylic acid solution being used was changed to 13.2 g (acrylic acid 147 mmol; 70 mol % relative to all amino groups of polyethylenimine), and the amount of the pure water being used was changed to 54.6 g, and the temperature of the aqueous acrylic acid solution during its dropping addition and reaction was changed to the boiling point, and the reaction time was changed to 6 hours. In this reaction, the X value was 20 % and, in comparison, the reaction concentration was 20 %.

From the GPC analysis result of the resultant aqueous polymer solution, it was found that the content of acrylic acid existing as an impurity in the resultant polymer was 3.7 % in terms of solid component content (i.e. ratio (%) of (solid component) weight of acrylic acid to (entire solid components) weight of polymer). In addition, from the GPC analysis result, it was found that the resultant polyethylenimine-derived polymer was 350,000 in weight-average molecular weight and 13,400 in number-average molecular weight.

The resultant polyethylenimine-derived polymer was measured by $^1$H-NMR in the same way as of Example 1. Its result was as follows:

$^1$H-NMR ($\delta$ in $D_2O$) 2.2 ppm (2H), 2.5 ppm (8.2H)

From this result, it was clear that the resultant polyethylenimine-derived polymer was an addition product of acrylic acid to 65 mol % of all amino groups of the polyethylenimine chain.

[Comparative Example 1]:

An amount of 18 g of polyethylenimine (weight-average molecular weight: 9,500, number-average molecular weight: 6,500) (all amino groups of polyethylenimine chain: 419 mmol) was charged into a glass reactor as equipped with a thermometer and a stirrer. Then, under cooling, 32.3 g of pure water was added thereto to carry out dissolution. The resultant aqueous polyethylenimine solution was heated to a temperature of 50 °C, and then 13.2 g of a 80 % aqueous acrylic acid solution (acrylic acid 147 mmol; 35 mol % relative to all amino groups of polyethylenimine) was dropwise added thereto under stirring over a period of 30 minutes. After the end of this dropping addition, the resultant mixture was cause to react at 50 °C for 24 hours, thus obtaining a polyethylenimine-derived polymer in the form of an aqueous polymer solution of 48 % in solid component content.

From the GPC analysis result of the aqueous polymer solution, it was found that the resultant polyethylenimine-derived polymer was 16,700 in weight-average molecular weight and 9,700 in number-average molecular weight.

The resultant polyethylenimine-derived polymer was measured by $^1$H-NMR in the same way as of Example 1. From its result, it was clear that the resultant polyethylenimine-derived polymer was an addition product of acrylic acid to 32 mol % of all amino groups of the polyethylenimine chain.

[Comparative Example 2]:

An amount of 50 g of a 30 % aqueous polyethylenimine (weight-average molecular weight: 98,200, number-average molecular weight: 11,800) solution (all amino groups of polyethylenimine chain: 349 mmol) was charged into a glass reactor as equipped with a thermometer and a stirrer. This aqueous polyethylenimine solution was heated to a temperature of 50 °C, and then 11.0 g of a 80 % aqueous acrylic acid solution (acrylic acid 122 mmol; 35 mol % relative to all amino groups of polyethylenimine) was dropwise added thereto under stirring over a period of 30 minutes. After the end of this dropping addition, the resultant mixture was cause to react at 50 °C. As a result, after 1 hour, the viscosity became too high, so the stirring became difficult. The resultant gelled material was diluted to 4 times with pure water, but the resultant polymer swelled and did not uniformly dissolve. In this reaction, the X value was 27 % and, in comparison, the reaction concentration was 39 %.

Next, the dye transfer inhibitability of the aqueous polymer solutions of the polyethylenimine-derived polymers, having been obtained from Examples 1 to 6 and Comparative Example 1, was evaluated in the following way. The results are shown in Table 1.

<Dye transfer inhibitability>:

An aqueous detergent solution was prepared in accordance with the following formulation:

[Formulation into detergent]:

Anionic surfactant (Neopelex F-25)[Note 1]: 0.2 g (active component content: 0.05 g)
Sodium carbonate: 0.05 g
Aqueous polymer solution of polyethylenimine-derived polymer: 0.2 g in terms of solid component content
Water: balance (added in such an amount that the total weight would be 30 g)

Note 1) Neopelex F-25: sodium dodecylbenzenesulfonate "Neopelex F-25" produced by Kao Corporation

Next, cotton cloth (JIS-L0803 cotton cloth (Kanakin #3)) was cut into the size of 5 cm × 5 cm to thus prepare 10 pieces of white cloth. In addition, a 0.25 % aqueous solution of a dye (Chlorazol Black LF; produced by TOKYO KASEI KOGYO CO., LTD.) was prepared. Then, 230 g of pure water was taken into a beaker of 300 mL, and then 15 g of the above aqueous detergent solution followed by 5 g of the above aqueous dye solution was added thereto. The water temperature of the resultant mixed solution was adjusted to 25 °C, and then the above 10 pieces of white cotton cloth were immersed therein for 10 minutes. Next, the white cloth was pulled up to thus drain it of water, and then moved into a pot (containing 500 mL of pure water of 25 °C) of a Terg-O-Tometer, and then stirred at 100 rpm for 2 minutes. Thereafter, the cloth was pulled up to thus drain it of water, and then dried with an iron to thus prepare contaminated cloth.

The reflectance (Hunter's whiteness degree) of the white cloth (original cloth) before the above test and that of the white cloth (contaminated cloth) after the above test were measured with a color difference meter ("SE2000" produced by Nippon Denshoku Kogyo Co., Ltd.), and their respective average values as to 10 pieces of each of the original cloth and the contaminated cloth were calculated. Then, the dye transfer inhibitability was evaluated by determining the dye transfer inhibition ratio from the above average values in accordance with the following equation:

$$\text{Dye transfer inhibition ratio (\%)} = (\text{reflectance of contaminated cloth/reflectance of original cloth}) \times 100$$

Incidentally, for comparison, the dye transfer inhibition ratio was determined in the same way also as to a case (blank) where the aqueous polymer solution of the polyethylenimine-derived polymer was not added and a case where the aqueous polymer solution of the polyethylenimine-derived polymer was replaced with polyethylenimine (weight-average molecular weight: 98,200, number-average molecular weight: 11,800).

**EP 1 561 769 B1**

Table 1

| Aqueous polymer solution used | | | Dye transfer inhibition ratio (%) |
|---|---|---|---|
| Type | | Weight-average molecular weight | |
| Example 1 | Addition product of acrylic acid | 284000 | 66.6 |
| Example 2 | Addition product of maleic acid | 140000 | 62.9 |
| Example 3 | Addition product of maleic acid | 350000 | 66.8 |
| Example 4 | Addition product of maleic acid | 247000 | 68.7 |
| Example 5 | Addition product of maleic acid | 369000 | 71.5 |
| Example 6 | Addition product of acrylic acid | 350000 | 68.0 |
| Comparative Example 1 | Addition product of acrylic acid | 16700 | 59.8 |
| Not added (blank) | - | - | 53.0 |
| Polyethylenimine | - | 98200 | 59.1 |

From the results of Table 1, it was clear that: in any case of using the aqueous polymer solution of the polyethylenimine-derived polymer according to the present invention, the dye transfer inhibition ratio was more than 60 %, and excellent dye transfer inhibitability as a detergent was therefore exercised. In addition, when the contaminated cloth having been obtained in the above test was compared with each other by the eye, a clear difference could be recognized even by the eye between each contaminated cloth of more than 60 % in dye transfer inhibition ratio and the other contaminated cloth of not more than 60 % in dye transfer inhibition ratio. From these results, it is understood that the polyethylenimine-derived polymer according to the present invention efficiently disperses such as liquid dirt and dyes.

The polyalkylenimine-derived polymer according to the present invention is excellent in the dispersibility of such as liquid (particularly, water-soluble) dirt and dyes and is therefore usable favorably for such as: detergents and detergent additives excellent in the redeposition inhibitability and the dye transfer inhibitability; water-treating agents excellent in the scale inhibitability; and various dispersants.

Various details of the invention may be changed without departing from its scope. Furthermore, the foregoing description of the preferred embodiments according to the present invention is provided for the purpose of illustration only, and not for the purpose of limiting the invention as defined by the appended claims.

**Claims**

1. A polyalkylenimine-derived polymer, which is an addition product of a carboxyalkyl group to a polyalkylenimine chain and is in the range of 100,000 to 5,000,000 in weight-average molecular weight.

2. A polyalkylenimine-derived polymer according to claim 1, which is not higher than 20 weight % in content of an unsaturated carboxylic acid or its salt as an impurity.

3. A polyalkylenimine-derived polymer according to claim 1 or 2, which is an addition product of the carboxyalkyl group to a nitrogen atom of the polyalkylenimine chain.

4. A process for production of a polyalkylenimine-derived polymer according to any one of claims 1-3, which comprises a step of causing a polyalkylenimine of 70,000 to 1,000,000 in weight-average molecular weight and an unsaturated

14

carboxylic acid to react together wherein the reaction is carried out under conditions where its reaction concentration is in the range of from 5 weight% up to an X value (weight%) determined by the following equation:

$$\text{X value (weight\%)} = 34-(\text{ratio(mol\%) of unsaturated carboxylic acid (mols) to be caused to react relative to all amino groups (mols) of polyalkylenimine chain)}/5.$$

5. A detergent additive, which comprises, as an essential component, the polyalkylenimine-derived polymer as recited in any one of claims 1 to 3.

6. A detergent, which comprises, as an essential component, the polyalkylenimine-derived polymer as recited in any one of claims 1 to 3.

7. A water-treating agent, which comprises, as an essential component, the polyalkylenimine-derived polymer as recited in any one of claims 1 to 3.

8. A dispersant, which comprises, as an essential component, the polyalkylenimine-derived polymer as recited in any one of claims 1 to 3.

**Patentansprüche**

1. Polyalkyleniminderivatpolymer, das ein Additionsprodukt einer Carboxyalkylgruppe an eine Polyalkyleniminkette ist und ein massegemitteltes Molekulargewicht im Bereich von 100.000 bis 5.000.000 aufweist.

2. Polyalkyleniminderivatpolymer nach Anspruch 1, das einen Gehalt von nicht höher als 20 Gew.-% an einer ungesättigten Carbonsäure oder deren Salz als Verunreinigung aufweist.

3. Polyalkyleniminderivatpolymer nach Anspruch 1 oder 2, das ein Additionsprodukt der Carboxyalkylgruppe an ein Stickstoffatom der Polyalkyleniminkette ist.

4. Verfahren zur Herstellung eines Polyalkyleniminderivatpolymers nach einem der Ansprüche 1 - 3, das die Stufe des Bewirkens einer Reaktion von einem Polyalkylenimin eines massegemittelten Molekulargewichts von 70.000 bis 1.000.000 und einer ungesättigten Carbonsäure miteinander umfasst, wobei die Reaktion unter Bedingungen durchgeführt wird, wobei deren Reaktionskonzentration im Bereich von 5 Gew.-% bis zu einem X-Wert (Gew.-%), der durch die im folgenden angegebene Gleichung bestimmt wird, liegt:

$$\text{X-Wert (Gew.-\%)} = 34 - (\text{Anteil (Mol-\%) der ungesättigten Carbonsäure (mol), die reagieren soll, bezogen auf alle Aminogruppen (mol) der Polyalkyleniminkette)}/5.$$

5. Detergensadditiv, das als wesentliche Komponente das Polyalkyleniminderivatpolymer nach den Angaben in einem der Ansprüche 1 bis 3 umfasst.

6. Detergens, das als wesentliche Komponente das Polyalkyleniminderivatpolymer nach den Angaben in einem der Ansprüche 1 bis 3 umfasst.

7. Wasserbehandlungsmittel, das als wesentliche Komponente das Polyalkyleniminderivatpolymer nach den Angaben in einem der Ansprüche 1 bis 3 umfasst.

8. Dispergiermittel, das als wesentliche Komponente das Polyalkyleniminderivatpolymer nach den Angaben in einem der Ansprüche 1 bis 3 umfasst.

**Revendications**

1. Polymère dérivé de polyalkylèneimine, qui est un produit d'addition d'un groupement carboxyalkyle à une chaîne polyalkylèneimine et qui présente un poids moléculaire moyen pondéré dans la gamme de 100 000 à 5 000 000.

2. Polymère dérivé de polyalkylèneimine selon la revendication 1, qui n'a pas une teneur supérieure à 20 % en poids d'un acide carboxylique insaturé ou de son sel en tant qu'impureté.

3. Polymère dérivé de polyalkylèneimine selon la revendication 1 ou 2, qui est un produit d'addition du groupement carboxyalkyle à un atome d'azote de la chaîne polyalkylèneimine.

4. Procédé de production d'un polymère dérivé de polyalkylèneimine selon l'une quelconque des revendications 1 à 3, qui comprend une étape de mise en réaction d'une polyalkylèneimine d'un poids moléculaire moyen pondéré de 70 000 à 1 000 000 et d'un acide carboxylique insaturé, la réaction étant réalisée dans des conditions où sa concentration de réaction est dans la gamme de 5 % en poids à une valeur X (% en poids) déterminée par l'équation suivante :

```
valeur X (% en poids) = 34 - (rapport (% en moles)
entre l'acide carboxylique insaturé (moles) étant mis
en réaction et tous les groupements amino (moles) de la
chaîne polyalkylèneimine)/5.
```

5. Additif de détergent qui comprend, en tant que composant essentiel, le polymère dérivé de polyalkylèneimine selon l'une quelconque des revendications 1 à 3.

6. Détergent qui comprend, en tant que composant essentiel, le polymère dérivé de polyalkylèneimine selon l'une quelconque des revendications 1 à 3.

7. Agent pour le traitement de l'eau qui comprend, en tant que composant essentiel, le polymère dérivé de polyalkylèneimine selon l'une quelconque des revendications 1 à 3.

8. Dispersant qui comprend, en tant que composant essentiel, le polymère dérivé de polyalkylèneimine selon l'une quelconque des revendications 1 à 3.

**EP 1 561 769 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 48020203 B

- JP 2003286344 A